**Europäisches Patentamt**

**European Patent Office**

**Office européen des brevets**

(19)

(11) Veröffentlichungsnummer: **0 392 135**

**A1**

(12) # EUROPÄISCHE PATENTANMELDUNG

(21) Anmeldenummer: **90100712.0**

(22) Anmeldetag: **15.01.90**

(51) Int. Cl.⁵: **F16J 15/14, B29C 39/10**

(30) Priorität: **04.04.89 DE 3910836**

(43) Veröffentlichungstag der Anmeldung:
**17.10.90 Patentblatt 90/42**

(84) Benannte Vertragsstaaten:
**AT BE CH DE DK ES FR GB GR IT LI LU NL SE**

(71) Anmelder: **IMO INDUSTRIES GMBH**
**Dorn-Assenheimer-Strasse 27**
**D-6361 Reichelsheim 4(DE)**

(72) Erfinder: **Strzodka, Hubert**
**Im Mühlfeld 11 a**
**D-6360 Friedberg(DE)**

(74) Vertreter: **Schlagwein, Udo, Dipl.-Ing.**
**Anwaltsbüro Ruppert & Schlagwein**
**Frankfurter Strasse 34**
**D-6350 Bad Nauheim(DE)**

(54) **Vorrichtung mit einer Dichtung.**

(57) Ein axial verschiebliches Bauteil (2) ist gegen-über einem Gehäuse (1) mittels einer Dichtung (4) abgedichtet, welche aus einem Stützteil (15) und einem Vergußteil (16) besteht. Das Vergußteil (16) ist durch Einspritzen einer Vergußmasse in einen Dichtraum (14) erzeugt. Dadurch liegt das Vergußteil (16) gut dichtend gegen das Bauteil 2 an, ohne es mit radialen Kräften zu beaufschlagen.

Fig. 2

EP 0 392 135 A1

Die Erfindung betrifft eine Vorrichtung mit einem in einem Gehäuse verschieblich oder drehbar angeordneten Bauteil und einer das Bauteil gegenüber dem Gehäuse abdichtenden, in einem Dichtraum angeordneten Dichtung.

Das Abdichten von aus einem Gehäuse herausgeführten Bauteilen ist eine in der Technik sehr häufig vorkommende Aufgabe, die durch eine große Anzahl sehr unterschiedlich gestalteter Bewegungsdichtungen mehr oder minder gut gelöst werden kann. Wenn man eine zuverlässige Abdichtung erreichen will, dann ist es erforderlich, daß die Dichtung mit beträchtlicher Vorspannung gegen das abzudichtende Teil anliegt. Das hat beipielsweise bei Druckschaltern den Nachteil, daß die Dichtung die Ansprechempfindlichkeit des Druckschalters herabsetzt, weil sie infolge ihrer Vorspannung den durch den Schaltdruck zu verschiebenden Schaltstößel zunächst mit erheblicher Kraft festhält. Mit den bisher bekannten Mitteln ist deshalb nicht der Wunsch zu erfüllen, daß die Dichtung möglichst reibungsarm arbeitet und gleichzeitig zuverlässig dichtet.

Der Erfindung liegt die Aufgabe zugrunde, eine Vorrichtung der eingangs genannten Art so auszubilden, daß eine möglichst zuverlässige Abdichtung bei möglichst geringen, die Beweglichkeit des abzudichtenden Bauteils behindernden Reibkräften eintritt.

Diese Aufgabe wird erfindungsgemäß dadurch gelöst, daß die Dichtung durch ein Vergußteil aus einer aushärtbaren, in den Dichtraum nach Montage des Bauteiles eingebrachten Vergußmasse gebildet ist.

Durch diese Gestaltung entsteht durch das Ausgießen des Dichtraumes eine Dichtung, welche unabhängig von Toleranzen zwangsläufig gut dichtend gegen das abzudichtende Bauteil anliegt, ohne daß eine unerwünscht große, radiale Vorspannung erforderlich wird. Da die erfindungsgemäße Dichtung durch das Ausgießen nicht linienförmig, sondern über einen längeren Bereich gegen das abzudichtende Bauteil anliegt, ist nur mit einem sehr geringen Verschleiß zu rechnen, so daß die Dichtheit auch nach längerer Benutzung der Vorrichtung erhalten bleibt.

Zum Abdichten von ruhenden Bauteilen ist es schon lange bekannt, Fugen zwischen dem ruhenden Bauteil und einem Gehäuse durch eine Vergußmasse auszugießen. Die Erfindung wendet dieses Dichtungsprinzip für sich bewegende Bauteile an.

Beim Ausgießen des Dichtraumes besteht bei einem größeren Lagerspalt die Möglichkeit, daß die Vergußmasse in den Lagerspalt gelangt. Um das zu verhindern, könnte man den Lagerspalt zunächst mit einem Wachs ausfüllen. Auf einen solchen Arbeitsgang kann verzichtet werden, wenn gemäß einer vorteilhaften Ausgestaltung der Erfindung die Dichtung ein den Lagerspalt zwischen dem Gehäuse und dem Bauteil ohne größere, radiale Andrückkraft abdichtendes Stützteil hat und daran anschließend auf der Gehäuseaußenseite das Vergußteil vorgesehen ist.

Das Stützteil kann unterschiedlich gestaltet sein. Eine besonders einfache Ausbildung besteht darin, daß das Stützteil eine O-Ring-Dichtung ist.

Alternativ ist es jedoch auch möglich, daß das Stützteil eine auf dem abzudichtenden Bauteil aufsitzende, radial im Dichtraum verschiebliche Scheibe aus einem Lagerwerkstoff ist. Die radiale Verschiebbarkeit stellt sicher, daß auch bei nicht genau mit der Dichtkammer fluchtendem Bauteil durch die Dichtung keine einseitigen, radialen Kräfte auf das zu dichtende Bauteil wirken.

Möglich ist es auch, daß die als Vergußteil ausgebildete Dichtung die Form einer fest mit dem Bauteil und dem Gehäuse verbundenen Membran hat.

Das Abdichten eines beweglichen Bauteiles mittels einer aus einer Vergußmasse erzeugten Dichtung kann für sehr unterschiedliche Anwendungsfälle vorteilhaft sein. Eine besonders günstige Anwendung der Erfindung ist dann gegeben, wenn es sich bei dem Bauteil um einen vom Meßdruck beaufschlagbaren Kolben eines Druckschalters handelt.

Die Erfindung läßt zahlreiche Ausführungsformen zu. Zwei davon sind in der Zeichnung dargestellt und werden nachfolgend beschrieben. Die Zeichnung zeigt in

Fig. 1 einen Längsschnitt durch einen Druckschalter mit der erfindungsgemäßen Abdichtung,

Fig. 2 einen gegenüber Figur 1 stark vergrößerten Abdichtungsbereich,

Fig. 3 eine zweite Ausführungsform eines Abdichtungsbereiches einer Vorrichtung nach der Erfindung.

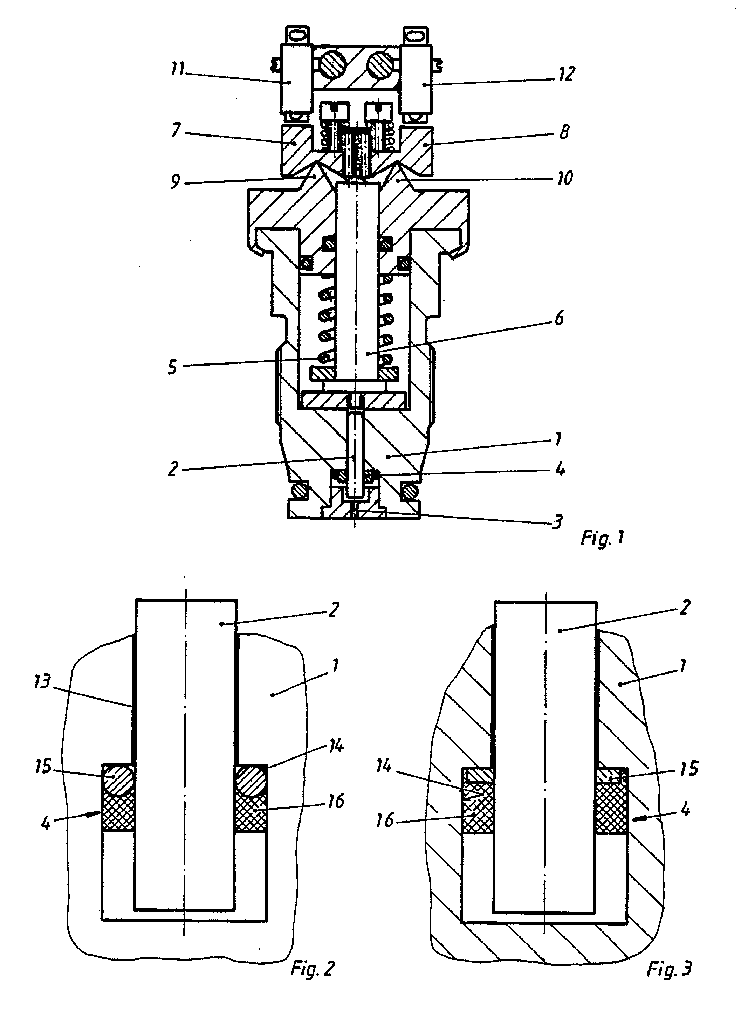

Der in Figur 1 als Ganzes dargestellte Druckschalter hat in einem Gehäuse 1 ein als Kolben ausgebildetes, axial verschiebliches Bauteil 2, dessen untere Stirnfläche über eine Gehäusebohrung 3 mit Druck zu beaufschlagen ist. Die Abdichtung des Bauteiles 2 zum Gehäuse 1 hin erfolgt durch eine erfindungsgemäß ausgebildete Dichtung 4. Bei Druckbeaufschlagung des Bauteiles 1 bewegt sich dieses in das Gehäuse 1 hinein und verschiebt gegen die Kraft einer Schalterfeder 5 einen Stößel 6. Dieser Stößel 6 vermag zwei Kipphebel 7, 8 zu verschwenken, die jeweils auf einer Schneide 9, 10 schwenkbar gehalten sind. Diese Kipphebel 7, 8 vermögen jeweils einen Mikroschalter 11, 12 zu betätigen.

Die Figur 2 zeigt gegenüber Figur 1 stark vergrößert, wie das Bauteil 2 aus dem Gehäuse 1 nach unten hin herausgeführt und mit der Dichtung 4 abgedichtet ist. Zu sehen ist, daß das Bauteil 2 im Bereich seiner Gehäusedurchführung beträchtliches Spiel hat, so daß ein Lagerspalt 13 entsteht. Die Dichtung 4 ist in einem Dichtraum 14 angeordnet und besteht aus einem bei diesem Ausführungsbeispiel als O-Ring ausgebildeten Stützteil 15 und einem Vergußteil 16. Das als O-Ring ausgebildete Stützteil 15 berührt das Bauteil 2 ohne größere, radiale Vorspannung. Es wird bei der Montage locker auf das Bauteil 2 geschoben. Danach wird das Vergußteil 16 durch Einspritzen einer geeigneten Vergußmasse, beispielsweise Silikonvergußmasse, erzeugt. Auf diese Weise entsteht ein Vergußteil, welches alle vorhandenen Toleranzen ausgleicht und ohne radiale Kräfte gut dichtend gegen das Bauteil 2 anliegt.

Bei der Ausführungsform nach Figur 3 handelt es sich bei dem Stützteil 15 um eine Scheibe aus einem Lagerwerkstoff, wie beispielsweise Messing. Diese liegt eng gegen das Bauteil 2 an, ist jedoch in dem Dichtraum 14 radial beweglich. Die Vergußmasse 14 greift außen über dieses als Scheibe ausgebildete Stützteil 15.

Nicht dargestellt ist eine Ausführungsform, bei der das Vergußteil 16 als Membran ausgebildet ist, welche über die untere Stirnfläche des als Kolben ausgebildeten Bauteiles 2 verläuft und dadurch das Gehäuse 2 abdichtet. Die Verschiebung des Bauteiles 2 ist dann durch Verformung dieser Membran möglich.

Auflistung der verwendeten Bezugszeichen

    1 Gehäuse
    2 Bauteil
    3 Gehäusebohrung
    4 Dichtung
    5 Schalterfeder
    6 Stößel
    7 Kipphebel
    8 Kipphebel
    9 Schneide
    10 Schneide
    11 Mikroschalter
    12 Mikroschalter
    13 Lagerspalt
    14 Dichtraum
    15 Stützteil
    16 Vergußteil

**Ansprüche**

1. Vorrichtung mit einem in einem Gehäuse verschieblich oder drehbar angeordneten Bauteil und einer das Bauteil gegenüber dem Gehäuse abdichtenden, in einem Dichtraum angeordneten Dichtung, dadurch gekennzeichnet, daß die Dichtung (4) durch ein Vergußteil (16) aus einer aushärtbaren, in den Dichtraum (14) nach Montage des Bauteiles (2) eingebrachten Vergußmasse gebildet ist.

2. Vorrichtung nach Anspruch 1, dadurch gekennzeichnet, daß die Dichtung (4) ein den Lagerspalt (13) zwischen dem Gehäuse (1) und dem Bauteil (2) ohne größere, radiale Andrückkraft abdichtendes Stützteil (15) hat und daran anschließend auf der Gehäuseaußenseite das Vergußteil (16) vorgesehen ist.

3. Vorrichtung nach Anspruch 2, dadurch gekennzeichnet, daß das Stützteil (15) eine O-Ring-Dichtung ist.

4. Vorrichtung nach Anspruch 2, dadurch gekennzeichnet, daß das Stützteil (15) eine auf dem abzudichtenden Bauteil (2) aufsitzende, radial im Dichtraum (14) verschiebliche Scheibe aus einem Lagerwerkstoff ist.

5. Vorrichtung nach Anspruch 1, dadurch gekennzeichnet, daß die als Vergußteil ausgebildete Dichtung die Form einer fest mit dem Bauteil und dem Gehäuse verbundene Membran hat.

6. Vorrichtung nach zumindest einem der vorangehenden Ansprüche, dadurch gekennzeichnet, daß es sich bei dem Bauteil (2) um einen vom Meßdruck beaufschlagbaren Kolben eines Druckschalters handelt.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 628 313 (DAIMLER-BENZ) <br> * Ganzes Dokument * <br> --- | 1 | F 16 J 15/14 <br> B 29 C 39/10 |
| X | DE-B-2 324 251 (RHEINSTAHL) <br> * Ganzes Dokument * <br> --- | 1 | |
| X | FR-A-2 444 804 (LIST) <br> * Seite 4, Zeile 25 - Seite 5, Zeile 26; Figur 2 * <br> --- | 1,2 | |
| A | DESIGN ENGINEERING, April 1987, Seiten 9-10, London, GB; P. HANIFAN: "Design idea of the month. Redesigned pressure switch has greater accuracy" <br> * Seite 9; Figur 1 * <br> --- | 1,5,6 | |
| A | DE-C- 876 561 (WEIHE) <br> * Ganzes Dokument * <br> ----- | 1,6 | |

| | |
|---|---|
| | **RECHERCHIERTE SACHGEBIETE (Int. Cl.5)** <br><br> F 16 J <br> F 16 C <br> B 29 C |

Der vorliegende Recherchenbericht wurde für alle Patentansprüche erstellt

| Recherchenort | Abschlußdatum der Recherche | Prüfer |
|---|---|---|
| DEN HAAG | 08-08-1990 | LEGER M.G.M. |

EPO FORM 1503 03.82 (P0403)